# EUROPÄISCHE PATENTANMELDUNG

(11) **EP 4 806 967 A1**
(43) Veröffentlichungstag der Anmeldung: **16.09.2026**
(21) Anmeldenummer: 25163903.5
(22) Anmeldetag: 14.03.2025
(51) Int. Cl.: C09J 7/10, C09J 7/38, C09J 153/02

(54) **DURCH DEHNENDES VERSTRECKEN WIEDERABLÖSBARERER SELBSTKLEBEARTIKEL MIT EINER GESCHÄUMTEN HAFTKLEBEMASSE**

(71) Anmelder: TESA SE, 22848 Norderstedt (DE)
(72) Erfinder: GARBERS, Julia, 22848 Norderstedt (DE); DOLLASE, Thilo, 22848 Norderstedt (DE)
(74) Vertreter: tesa SE

(57) **Zusammenfassung**

Die vorliegende Erfindung betrifft einen durch dehnendes Verstrecken wiederablösbareren Selbstklebeartikel, der zumindest eine Schicht H1 einer Haftklebemasse aufweist.

Die Haftklebemasse enthält die folgenden Bestandteile:
(a) eine Elastomerkomponente, wobei die Elastomerkomponente (a) 40 bis 100 Gew.-% an i.) hydrierten Polyvinylaromat-Polydien-Blockcopolymeren P umfasst, die einen linearen ABA-Aufbau oder einen linearen (AB)₂Z-Aufbau oder einen radialen (AB)ₙ-Aufbau oder einen radialen (AB)ₙ-Z-Aufbau mit n ≥ 3 aufweisen, wobei A = Polyvinylaromat, B = Ethylen und Butylen oder Ethylen und Propylen und Z = Derivat einer Kopplungssubstanz sind und wobei der Ethylen-Anteil in den B-Blöcken bevorzugt mindestens 50 Gew.-% beträgt, wobei das oder die hydrierten Polyvinylaromat-Polydien-Blockcopolymere P einen Polyvinylaromatenanteil von mindestens 15 Gew.-% und ein Peak-Molekulargewicht von 60.000 bis 500.000 g/mol aufweisen, wobei die Polydien-Blöcke einen Hydrierungsgrad von wenigstens 90 % aufweisen, und
(b) eine Klebharzkomponente, und
(c) optional eine Verstärkungskomponente, die wenigstens ein Harz mit einem MMAP-Wert zwischen -10 °C und +30 °C, und einem Erweichungspunkt von mindestens 140 °C ist, und
(d) optional eine Weichmacherkomponente,
und ist dadurch gekennzeichnet, dass sie geschäumt ist.

## Beschreibung

Die vorliegende Erfindung betrifft einen durch dehnendes Verstrecken wiederablösbareren Selbstklebeartikel, der zumindest eine Schicht H1 einer Haftklebemasse aufweist.

Klebstoffe und Klebebänder werden im Allgemeinen verwendet, um zwei Substrate zusammenzufügen, so dass eine temporäre oder permanente Verbindung entsteht. Vielfache Verwendung finden Selbstklebebänder, die zumindest eine Schicht einer Haftklebeformulierung enthalten. Unter Haftklebrigkeit ist die Eigenschaft eines Materials oder einer Formulierung zu verstehen, bei Raumtemperatur unter leichtem Andruck eine belastbare Verbindung mit einer zu verklebenden Oberfläche aufzubauen, ohne dabei eine chemische oder physikalische Änderung zu durchlaufen. Sie zeichnen sich durch permanente Anfassklebrigkeit aus und unterscheiden sich insofern von anderen Klebesystemen, insbesondere Flüssigklebstoffen. Diese Eigenschaft führt zu Vorteilen in der Handhabbarkeit und Nutzung im Verklebungsprozess. Selbstklebebänder haben daher Einzug in unterschiedlichste Bereiche industrieller Anwendungen und im Privatkundenbereich gehalten.

Durch dehnendes Verstrecken wiederablösebare Selbstklebeprodukte, die eine oder mehrere Schichten auf Basis von Styrol-Blockcopolymeren enthalten, sind bekannt.

Aus der DE 100 03 318 A1, DE 102 52 088 A1, DE 102 52 089 A1 und DE 10 2007 021 504 A1 sind Ansätze bekannt, auf Basis hydrierter Polystyrol-Polydien-Blockcopolymeren Formulierungen vorzuschlagen, die für durch dehnendes Verstrecken wiederablösbare Selbstklebeprodukte geeignet sind. Den dort beanspruchten Selbstklebeprodukten lagen Zielstellungen vor allem von Anwendungen aus dem Privatkundenbereich zugrunde, nämlich insbesondere im Haushalt einen Haken an einer Wand zu befestigen, der einen Gegenstand tragen soll. Besondere Anforderungen an Wärmescherfestigkeit werden dabei nicht gestellt. Formulierungen auf Basis hydrierter Polystyrol-Polydien-Blockcopolymere bieten dabei eine ausgeprägte Langzeitstabilität.

Durch dehnendes Verstrecken wiederablösbare Selbstklebeprodukte sind auch für industrielle Anwendungen vorgeschlagen worden. DE 10 2022 107 749 A1 beansprucht solche Produkte, die zusätzlich eine gesteigerte Wärmescherfestigkeit bieten, wie sie beispielsweise in Automobilanwendungen gefordert wird.

Geschäumte Haftklebemassen auf Basis von Vinylaromaten-Blockcopolymeren für Selbstklebeprodukte, die durch dehnendes Verstrecken wieder abgelöst werden können, sind ebenfalls beschrieben, wie beispielsweise in der EP 3 075 772 B1. Die darin offenbarten Beispiele führen keine hydrierten Blockcopolymere sondern lediglich Polystyrol-Polybutadien-Blockcopolymere (SBS Kraton D1102) auf. Verstärkerharze können in einem Anteilsbereich von 0,2 bis 10 Gew.-% eingesetzt werden. Es wird jedoch keine Angabe zur Natur dieser Materialien gemacht.

Insbesondere für industrielle Anwendungen müssen wiederablösbare Selbstklebeprodukte neben Langzeitbeständigkeit eine ausreichende Verklebungsfestigkeit und eine hohe Wärmescherfestigkeit sowie insbesondere eine hohe Reißerbeständigkeit aufweisen, damit sie beim Dehnen nicht reißen, bevor der gesamte Artikel durch dehnendes Verstrecken aus dem verklebten Verbund gelöst ist. Dabei spielt auch eine hohe Feucht-Wärme-Stabilität eine wichtige Rolle.

Insbesondere aber nicht ausschließlich im Automobilbereich und Transportsektor nimmt Leichtbau eine immer stärkere Designvorgabe ein, da sich das Gewicht eines Fahrzeugs direkt auf den Energieverbrauch auswirkt. Dies trifft nicht nur auf Fahrzeuge mit Kraftstoffnutzenden Motoren zu, sondern auch auf elektrisch betriebene. Bei Letzteren steigt mit sinkendem Fahrzeuggewicht bei gleicher Batteriekapazität die Reichweite. Insofern besteht nicht nur im Automobilbereich die Anforderung nach Gewichtseinsparung, und zwar im Hinblick auf alle Einsatzkomponenten und so auch Selbstklebebänder. Dies führt dazu, dass Klebebänder für Anwendungen verwendet werden, für die bisherige Klebebandprodukte nicht vorgesehen und entwickelt waren, und es kommen zusätzlich zu der mechanischen Belastung und den für Klebeanwendungen kritischen Haftuntergründen auch noch stetig steigende Anforderungen gerade für permanente Verklebungen hinsichtlich der UV- und Bewitterungsstabilität hinzu.

Eine Anforderung an Selbstklebebänder betrifft häufig nicht nur die Verklebungsleistung auf den zu fügenden Bauteilen, sondern auch eine bestimmte Klebebanddicke, um designspezifische Spaltmaße zu überbrücken bzw. zu schließen. Klebebanddicken können daher im Bereich von mehreren 100 Mikrometern oder sogar oberhalb von 1 mm liegen. Um diese Dimensionen zu erreichen, ohne übermäßig zum Gesamtgewicht des fertigen Produkts beizutragen, bieten sich Selbstklebebänder mit reduzierter Dichte an, was durch Schäumung einzelner oder mehrerer Schichten möglich ist. Das Selbstklebeband soll dabei darüber hinaus weitere zentrale Anforderungen an Verklebungsfestigkeit und Beständigkeit erfüllen. Es ist jedoch davon auszugehen, dass Schäumung einer Haftklebeschicht ihre kohäsiven Eigenschaften wie beispielsweise die Zugfestigkeit reduziert, was für die Reißerbeständigkeit im Ablöseprozess aber erwartbar nachteilig ist.

Der vorliegenden Erfindung liegt die Aufgabe zugrunde, einen durch dehnendes Verstrecken wiederablösbareren Selbstklebeartikel mit zumindest einer Schicht H1 einer Haftklebemasse bereitzustellen, der neben einer robusten und ausreichenden Verklebungsfestigkeit und hohen Wärmescherfestigkeit zudem eine gegenüber dem Stand der Technik verbesserte Reißerbeständigkeit, auch unter feucht-warmen Bedingungen, aufweist.

Gelöst wird diese Aufgabe in unerwarteter Weise durch den Selbstklebeartikel gemäß Anspruch 1. Gegenstand der abhängigen Ansprüche sind vorteilhafte Fortbildungen des Erfindungsgegenstandes. Weitere vorteilhafte Ausgestaltungen der Erfindung ergeben sich aus der Beschreibung wie nachfolgend ausgeführt.

Solche und weitere Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden.

Die vorliegende Erfindung betrifft einen durch dehnendes Verstrecken wiederablösbareren Selbstklebeartikel, der zumindest eine Schicht H1 einer Haftklebemasse aufweist, wobei die Haftklebemasse die folgenden Bestandteile enthält:
(a) eine Elastomerkomponente, wobei die Elastomerkomponente (a)
   40 bis 100 Gew.-% an i.) hydrierten Polyvinylaromat-Polydien-Blockcopolymeren P umfasst, die einen linearen ABA-Aufbau oder einen linearen (AB)₂Z-Aufbau oder einen radialen (AB)ₙ-Aufbau oder einen radialen (AB)ₙ-Z-Aufbau mit n ≥ 3 aufweisen, wobei A = Polyvinylaromat, B = Ethylen und Butylen oder Ethylen und Propylen und Z = Derivat einer Kopplungssubstanz sind und wobei der Ethylen-Anteil in den B-Blöcken bevorzugt mindestens 50 Gew.-% beträgt, wobei das oder die hydrierten Polyvinylaromat-Polydien-Blockcopolymere P einen Polyvinylaromatenanteil von mindestens 15 Gew.- % und ein Peak-Molekulargewicht von 60.000 bis 500.000 g/mol, bestimmt gemäß GPC (Test xi-a), aufweisen, wobei
   die Polydien-Blöcke einen Hydrierungsgrad von wenigstens 90 % aufweisen, und
(b) eine Klebharzkomponente, und
(c) optional eine Verstärkerkomponente, die wenigstens ein Harz mit einem MMAP-Wert zwischen -10 °C und +30 °C, und einem Erweichungspunkt von mindestens 140 °C ist, und
(d) optional eine Weichmacherkomponente,
wobei die Haftklebemasse dadurch gekennzeichnet ist, dass (e) sie geschäumt ist.

Unvorhersehbarerweise weist der erfindungsgemäße Selbstklebeartikel trotz Schäumung eine Verbesserung in der Reißerbeständigkeit auf. Dies war nicht zu erwarten und überrascht umso mehr, da dies für Selbstklebeartikel gefunden wurde, die keinen Permanentträger enthalten. Stattdessen war zu erwarten, dass sich die Schäumung negativ auf das Reißverhalten und insbesondere die Reißerbeständigkeit auswirkt.

Zudem zeigt der erfindungsgemäße Selbstklebeartikel eine hohe Wärmescherfestigkeit.

Der erfindungsgemäße Selbstklebeartikel erfüllt bevorzugt wenigstens die in Tabelle 1 angegebene Leistungsanforderung.

**Tabelle 1 - Bevorzugtes Leistungsprofil**

| Leistungskriterium | typisch | vorteilhaft | sehr vorteilhaft |
|---|---|---|---|
| Verklebungsfestigkeit (gemäß Test i) | ≥ 10,0 N/cm | ≥ 15,0 N/cm | ≥ 20,0 N/cm |
| Wärmescherfestigkeit (gemäß Test ii) | ≥ 125 °C | ≥ 150 °C | ≥ 175 °C |
| Reißerbeständigkeit (gemäß Test iiia, iiib bzw. iiic) | ≥ 70 % | ≥ 80 % | ≥ 90 % |

### Haftklebemasseschicht

Im Folgenden wird die Haftklebemasse der zumindest einen Schicht H1 der Haftklebemasse des erfindungsgemäßen Selbstklebeartikels näher beschrieben.

Unter einer Haftklebmasse wird im Einklang mit dem allgemeinen Verständnis eine Klebmasse verstanden, die bereits unter relativ schwachem Andruck eine dauerhafte Verbindung mit fast allen Haftgründen erlaubt und ggf. nach Gebrauch im Wesentlichen rückstandsfrei vom Haftgrund wieder abgelöst werden kann. Eine Haftklebmasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebmasse beruht auf ihren adhäsiven Eigenschaften und die Wiederablösbarkeit auf ihren kohäsiven Eigenschaften.

### (a) Elastomerkomponente

Die Elastomerkomponente (a) umfasst 40 bis 100 Gew.-% an i.) hydrierten Polyvinylaromat-Polydien-Blockcopolymeren P, die einen linearen ABA-Aufbau oder einen linearen (AB)₂Z-Aufbau oder einen radialen (AB)ₙ-Aufbau oder einen radialen (AB)ₙ-Z-Aufbau mit n ≥ 3 aufweisen, wobei A = Polyvinylaromat, B = Ethylen und Butylen oder Ethylen und Propylen und Z = Derivat einer Kopplungssubstanz sind und wobei der Ethylen-Anteil in den B-Blöcken bevorzugt mindestens 50 Gew.-% beträgt, wobei das oder die hydrierten Polyvinylaromat-Polydien-Blockcopolymere P einen Polyvinylaromatenanteil von mindestens 15 Gew.-% und ein Peak-Molekulargewicht von 60.000 bis 500.000 g/mol, bestimmt gemäß GPC (Test xi-a), aufweisen, wobei
die Polydien-Blöcke einen Hydrierungsgrad von wenigstens 90 % aufweisen.

Die Mengenangabe von 40 bis 100 Gew.-% an i.) hydrierten Polyvinylaromat-Polydien-Blockcopolymeren P bezieht sich auf das Gesamtgewicht der Elastomerkomponente (a). Die Elastomerkomponente kann dabei eines oder mehrere verschiedene Polyvinylaromat-Polydien-Blockcopolymere P umfassen, die sich dann insbesondere hinsichtlich ihres Aufbaus unterscheiden können.

Die Mengenangaben zum Ethylen-Anteil in den B-Blöcken beziehen sich auf das Gesamtgewicht der B-Blöcke.

Die Mengenangaben zum Polyvinylaromatenanteil beziehen sich auf das Gesamtgewicht an hydrierten Polyvinylaromat-Polydien-Blockcopolymeren P.

Beispiele für erfindungsgemäß einsetzbare Kopplungssubstanzen sind unter anderem bei Holden zu finden (G. Holden, D. R. Hansen in "Thermoplastic Elastomers", G. Holden, H. R. Kricheldorf, R. P. Quirk (Hrsg.), 3. Aufl. 2004, C. Hanser, München, S. 49f), ohne sich hierdurch einschränken zu wollen.

Mit dem angegebenen Hydrierungsgrad von wenigstens 90 % sind die Polydien-Blöcke im Wesentlichen voll hydriert. Bevorzugt weisen die Polydien-Blöcke einen Hydrierungsgrad von wenigstens 95 % und besonders bevorzugt von wenigstens 99 % auf.

Bevorzugt ist es, dass das oder die hydrierten Polyvinylaromat-Polydien-Blockcopolymere P einen Polyvinylaromatenanteil von mindestens 18 Gew.-%, besonders bevorzugt mindestens 25 Gew.-% aufweisen. Der Polyvinylaromatenanteil sollte jedoch nicht zu hoch sein. Vorteilhaft ist es, wenn der Polyvinylaromaten-Anteil nicht höher als 35 Gew.-% liegt. Günstig ist ein Polyvinylaromaten-Anteil von mindestens 18 Gew.-%, bevorzugt mindestens 25 Gew.-%, und bis zu 33 Gew.-%.

Hiermit weist der erfindungsgemäße Selbstklebeartikel ein optimiertes Eigenschaftsprofil hinsichtlich der Klebkräfte und des Reißverhaltens, insbesondere der Reißerbeständigkeit, auf.

Der Anteil an Polyvinylaromaten in den hydrierten Polyvinylaromaten-Polydien-Blockcopolymeren kann beispielsweise mittels ¹H- oder ¹³C-NMR (Kernspinresonanzspektroskopie, Test xii) bestimmt werden. Der Anteil an Polyvinylaromaten kann für kommerziell erhältliche hydrierte Polyvinylaromat-Polydien-Blockcopolymeren auch den Herstellerangaben entnommen werden.

Im Fall von zwei oder mehreren verschiedenen hydrierten Polyvinylaromat-Polydien-Blockcopolymeren P beträgt der Anteil an Polyvinylaromaten für jedes einzelne hydrierte Polyvinylaromat-Polydien-Blockcopolymer P mindestens 18 Gew.-%, besonders bevorzugt mindestens 25 Gew.-% und bis zu 35 Gew.-%, besonders bevorzugt bis zu 33 Gew.-%.

Weiterhin ist es bevorzugt, dass das oder die hydrierten Polyvinylaromat-Polydien-Blockcopolymere P ein Peak-Molekulargewicht von 80.000 bis 500.000 g/mol, besonders bevorzugt 100.000 bis 500.000 g/mol, bestimmt gemäß GPC (Test xi-a), aufweisen. Hiermit weist der erfindungsgemäße Selbstklebeartikel ein optimiertes Eigenschaftsprofil hinsichtlich der Klebkräfte und des Reißverhaltens, insbesondere der Reißerbeständigkeit, auf.

Vinylaromaten zum Aufbau des Blocks A umfassen bevorzugt Styrol, α-Methylstyrol und/oder andere Styrol-Derivate. Der Block A kann somit als Homo- oder Copolymer vorliegen. Besonders bevorzugt ist der Block A ein Polystyrol. Besonders bevorzugt handelt es sich somit um eines oder mehrere hydrierte Polystyrol-Polydien-Blockcopolymere P.

Blockcopolymere dieser Art bilden das Rückgrat der Formulierung. Sie bilden einen wesentlichen Teil, über den Einfluss auf die Klebeeigenschaften und auch die Reißerbeständigkeit und damit das Ablöseverhalten genommen wird.

Die in der erfindungsgemäßen Haftklebemasse eingesetzten hydrierten Polyvinylaromat-Polydien-Blockcopolymere sind bevorzugt solche, die durch anionische Polymerisation und sequenzielle Zugabe der Monomere für die jeweiligen Polymerblöcke, Vinylaromaten für die A-Blöcke und Diene für die B-Blöcke, erhalten werden. In vielen Herstellverfahren werden Diblockzwischenprodukte AB unter Verwendung eines Kopplungsagenzes Z' zu Triblockcopolymeren (2 AB + Z' → AB-Z-BA) oder radialen Copolymeren gekoppelt. Anschließend werden die B-Blöcke selektiv hydriert, so dass vorzugsweise Ethylen und Butylen oder Ethylen und Propylen als B-Blöcke resultieren.

Um das geforderte Eigenschaftsprofil zur erreichen, hat es sich als vorteilhaft erwiesen, wenn die Elastomerkomponente der Haftklebemasse zudem eines oder mehrere hydrierte Diblockcopolymere enthält. Über hydrierte Diblockcopolymere kann insbesondere vorteilhaft Einfluss auf die Klebkraft und das Auffließverhalten genommen werden.

Bevorzugt ist daher ein erfindungsgemäßer Selbstklebeartikel, bei dem die Elastomerkomponente der Haftklebemasse der wenigstens einen Haftklebemasseschicht H1 40 bis 99,9 Gew.-% an i.) hydrierten Polyvinylaromat-Polydien-Blockcopolymeren P umfasst, und die Elastomerkomponente (a) zudem 0,1 bis 60 Gew.-%, bevorzugt 10 bis 55 Gew.-%, sehr bevorzugt 20 bis 55 Gew.-%, weiter bevorzugt 25 bis 45 Gew.-% an ii.) hydrierten Polyvinylaromat-Polydien-Diblockcopolymeren D mit einem A'B'-Aufbau oder (A'B')Z-Aufbau umfasst, wobei A' = Polyvinylaromat, B' = Ethylen und Butylen oder Ethylen und Propylen, Z = Derivat einer Kopplungssubstanz ist und A' = A und B' = B sein kann, wobei die Summe der Mengen an hydrierten Polyvinylaromat-Polydien-Diblockcopolymeren D und Polyvinylaromaten-Polybutadien-Blockcopolymeren P in der Elastomerkomponente (a) 90 bis 100 Gew.-%, bevorzugt 95 bis 100 Gew.-%, besonders bevorzugt 100 Gew.-%, bezogen auf das Gesamtgewicht der Elastomerkomponente (a), beträgt.

Für die hydrierten Polyvinylaromat-Polydien-Blockcopolymere P gelten sämtliche obige Ausführungen.

Für die Kopplungssubstanz zum Diblockcopolymer D gelten dieselben Ausführungen wie für die Polyvinylaromat-Polydien-Blockcopolymere P.

Der Polyvinylaromatenanteil der Gesamtheit der Diblockcopolymere D ist zunächst einmal unabhängig vom Polyvinylaromatenanteil der Polyvinylaromat-Polydien-Blockcopolymere P.

Bevorzugt beträgt der Polyvinylaromatenanteil der Diblockcopolymere D mindestens 10 Gew.-% und bis zu 40 Gew.-%. Besonders bevorzugt beträgt der Polyvinylaromatenanteil der Diblockcopolymere D mindestens 18 Gew.-%, besonders bevorzugt mindestens 25 Gew.-%, und bis zu 35 Gew.-%, besonders bevorzugt bis zu 33 Gew.-%.

Auch hier weisen im Fall von zwei oder mehreren verschiedenen Diblockcopolymeren D alle Diblockcopolymere D einen Polyvinylaromatenanteil in den vorstehend genannten Bereichen auf.

Ansonsten gelten für das oder die Diblockcopolymere D dieselben Ausführungen hinsichtlich der Art der Polyvinylaromaten sowie des Hydrierungsgrades inklusive sämtlicher Bevorzugungsstufen.

Bevorzugt ist somit auch hier Polyvinylaromat gleich Polystyrol.

Bevorzugt ist es, dass der Anteil an hydrierten Polyvinylaromat-Polydien-Diblockcopolymeren D in der Elastomerkomponente (a) mindestens 10 Gew.-%, bevorzugt mindestens 20 Gew.-%, besonders bevorzugt mindestens 25 Gew.-%, und bis zu 60 Gew.- %, bevorzugt bis zu 55 Gew.-%, wiederum bevorzugt bis zu 45 Gew.-%, beträgt.

Hiermit wird ein besonders vorteilhaftes Eigenschaftsprofil, insbesondere im Hinblick auf die zu lösende Aufgabe, erhalten.

Bevorzugt ist es dabei auch, dass der Anteil an hydrierten Polyvinylaromat-Polydien-Blockcopolymeren P in der Elastomerkomponente (a) bis zu 90 Gew.-%, bevorzugt bis zu 80 Gew.-%, besonders bevorzugt bis zu 75 Gew.-%, und mindestens 40 Gew.-%, bevorzugt mindestens 45 Gew.-%, wiederum bevorzugt mindestens 55 Gew.-%, beträgt.

In einer bevorzugten Ausführungsform weist das zumindest eine Diblockcopolymer D ein Peak-Molekulargewicht, bestimmt mittels GPC, von < 100.000 g/mol auf.

In einer weiterhin bevorzugten Ausführungsform weist das zumindest eine Diblockcopolymer D ein Peak-Molekulargewicht, bestimmt mittels GPC, von größer 100.000 g/mol auf. Bevorzugt beträgt das Peak-Molekulargewicht hierbei höchstens 250.000 g/mol.

Die Elastomerkomponente enthält gemäß bevorzugter Ausführungsformen zudem ein weiteres hydriertes Polyvinylaromat-Polydien-Blockcopolymer, das sich durch einen linearen ABA-Aufbau sowie linearen (AB)₂Z-Aufbau oder radialen (AB)ₙ-Aufbau oder radialen (AB)ₙZ-Aufbau mit n ≥ 3 auszeichnet. Dieses Blockcopolymer kann einen Polyvinylaromaten-Anteil von kleiner 15 Gew.-% oder mehr und unabhängig davon ein Peak-Molekulargewicht von mehr als 500.000 g/mol oder weniger als 60.000 g/mol aufweisen. Sie kann auch mehrere dieser Art enthalten.

Hierdurch weist die Haftklebemasse eine verbesserte Verarbeitbarkeit auf.

Diese weiteren hydrierten Polyvinylaromat-Polydien-Blockcopolymere sind dann Teil der Elastomerkomponente, fallen aber nicht unter die Definition der hydrierten Polyvinylaromat-Polydien-Blockcopolymere P oder D. Die Summe der Mengen an Polyvinylaromat-Polydien-Blockcopolymer P und D in der Elastomerkomponente ist in diesem Fall dann kleiner als 100 Gew.-% bezogen auf das Gesamtgewicht der Elastomerkomponente.

Bevorzugt ist dabei, dass der Anteil der weiteren hydrierten Polyvinylaromat-Polydien-Blockcopolymere nicht zu hoch ist, woraus sich die bevorzugten Mengen und Summen der Mengen an Polyvinylaromat-Polydien-Blockcopolymer P und D in der Elastomerkomponente ergeben.

Die genannten hydrierten Polyvinylaromat-Polydien-Blockcopolymere umfassen wie ausgeführt Blöcke B, welche gummiartig sind und auch Elastomerblöcke oder Weichblöcke genannt werden, und Blöcke A oder A', welche glasartig sind und auch Hartblöcke genannt werden.

Die A-Blöcke und A'-Blöcke haben bevorzugt eine Glasübergangstemperatur von mindestens 25 °C, insbesondere mindestens 50 °C.

Für die B-Blöcke und B'-Blöcke ist eine Glasübergangstemperatur von maximal -30 °C, insbesondere maximal -50 °C, bevorzugt.

Diese Angaben beziehen sich auf die reinen, unabgemischten Blockcopolymere und werden erfindungsgemäß mittels DSC ermittelt, wie im Methodenteil unter Test vii näher beschrieben.

Bevorzugt enthält die Haftklebemasse 38 bis 60 Gew.-%, besonders bevorzugt 40 bis 58 Gew.-%, bezogen auf das Gesamtgewicht der Haftklebemasse, von der Elastomerkomponente (a). Gemäß besonders bevorzugter Ausführungsformen enthält die Haftklebemasse 45 bis 55 Gew.-%, insbesondere und beispielsweise 50 bis 52 Gew.-%, der Elastomerkomponente (a).

Es wurde festgestellt, dass ein zu geringer Anteil an hydriertem Polyvinylaromat-Polydien-Blockcopolymeren zur Folge hat, dass die Reißerbeständigkeit des Selbstklebeartikels sinkt, während ein zu hoher Anteil an hydriertem Polyvinylaromat-Polydien-Blockcopolymeren wiederum zur Folge hat, dass die Haftklebmasse zu viel an Klebvermögen verliert, so dass der Selbstklebeartikel für einzelne Anwendungen nicht mehr geeignet sein kann.

### (b) Klebharzkomponente

Die erfindungsgemäße Haftklebemasse enthält weiterhin eine Klebharzkomponente. Die Klebharzkomponente ist insbesondere ein oder mehrere Klebharze.

Die Klebharzkomponente ist im Rahmen der vorliegenden Erfindung nicht als Verstärkungskomponente zu verstehen, d.h. die Klebharzkomponente ist bevorzugt im Wesentlichen nicht mit den Hartblöcken der hydrierten Polydien-Blockcopolymere verträglich.

Das oder die Klebharze sind daher so ausgewählt, dass sie hauptsächlich mit den durch die B-Blöcke dominierten Bereiche der Haftklebemasse mischbar (verträglich, kompatibel) sind.

Die Klebharzkomponente wird insbesondere eingesetzt, um die Adhäsion in gewünschter Weise einzustellen. Unter einem "Klebharz" wird entsprechend dem allgemeinen Verständnis des Fachmanns ein oligomeres oder polymeres Harz verstanden, das die Adhäsion, also die Eigenklebrigkeit der Haftklebemasse im Vergleich zu einer kein Klebharz enthaltenden, ansonsten aber identischen Haftklebemasse erhöht. Klebharze sind spezielle Verbindungen mit im Vergleich zu den Elastomeren niedriger Molmasse, üblicherweise mit einem gewichtsmittleren Molekulargewicht M_{w} von kleiner 5.000 g/mol. Typischerweise beträgt das gewichtsmittlere Molekulargewicht einer im Rahmen der vorliegenden Erfindung verwendeten Klebharzkomponente von 400 bis 5.000 g/mol, bevorzugt von 500 bis 2.000 g/mol, bestimmt durch GPC (Test xi-b).

Der Anteil an Klebharzkomponente in der Haftklebemasse wirkt sich positiv auf die Verklebungsfestigkeit aus. Daher sollte der Klebharzanteil nicht zu gering sein. Es hat sich allerdings gezeigt, dass ein zu hoher Anteil an Klebharz(en) einen negativen Einfluss auf die Wärmescherfestigkeit und insbesondere auf die Wiederablösbarkeit hat.

Bevorzugt ist es daher, dass die Haftklebemasse 25 bis 55 Gew.-%, bevorzugt 32 bis 50 Gew.-%, besonders bevorzugt 35 bis 45 Gew.-%, bezogen auf das Gesamtgewicht der Haftklebemasse, der Klebharzkomponente (b) enthält.

Vorzugweise ist das wenigstens eine Klebharz der Klebharzkomponente ausgewählt aus der Gruppe bestehend aus Harzen auf Basis des Dicyclopentadiens, Kohlenwasserstoffharzen auf Basis von C₅, C₅/C₉- oder C₉-Monomerströmen, Polyterpenharzen auf Basis von α-Pinen, β-Pinen und/oder δ-Limonen und Polymerisaten reiner C₈- oder C₉-Aromaten, wobei das Harz partiell oder insbesondere vollständig hydriert sein kann und wobei Harze, die aus aromatischen Monomeren, wozu auch die reinen C₈- oder C₉-Aromaten zählen, gewonnen wurden, partiell oder vollständig hydriert sind. Unter "partiell hydriert" ist im Rahmen der vorliegenden Erfindung ein Hydrierungsgrad von mindestens 80 %, vorzugsweise mindestens 85 % zu verstehen.

Gemäß vorteilhafter Ausführungsformen ist das wenigstens eine Klebharz ein partiell oder vollständig hydriertes Kohlenwasserstoff- oder Polyterpenharz.

Das wenigstens eine Klebharz der Klebharzkomponente zeichnet sich weiterhin bevorzugt dadurch aus, dass es eine Erweichungstemperatur nach der Ring-und-Kugel-Methode von größer 85 °C, aber nicht mehr als 135 °C aufweist. Die Erweichungstemperatur kann dabei gemäß Test viii wie unten beschrieben bestimmt werden. Bevorzugt weisen alle Klebharze in der Klebharzkomponente eine Erweichungstemperatur in diesem Bereich auf.

Damit weist das oder die als Klebharzkomponente (b) enthaltenen Klebharze eine Erweichungstemperatur auf, die niedriger ist als die der Verstärkungskomponente (c). Bevorzugt beträgt die Erweichungstemperatur mindestens 95 °C, besonders bevorzugt mindestens 100 °C, ganz besonders bevorzugt mindestens 110 °C.

Die erfindungsgemäße Klebemasse weist vorzugsweise wenigstens ein Klebharz in der Klebharzkomponente auf, das einen DACP (diacetone alcohol cloud point) von wenigstens 25 °C, vorzugsweise von wenigstens 35 °C aufweist. Der DACP wird dabei gemäß Test ix, wie unten beschrieben, bestimmt.

In einer weiterhin bevorzugten Ausführungsform weist das wenigstens eine Klebharz einen MMAP von 65 bis 95 °C, bevorzugt 70 °C bis 90 °C auf. Der MMAP (mixed methylcyclohexane aniline point) ist der gemischte-Methylcyclohexan-Anilin-Trübungspunkt und dem Fachmann als Maß für die Aromatizität von Harzen bekannt. Die Bestimmung erfolgt mittels der im Methodenteil dieser Beschreibung angegebenen Methode MMAP (Test x).

Bevorzugt ist es, wenn die Klebharzkomponente b) 60 bis 100 Gew.-%, besonders bevorzugt 80 bis 100 Gew.-%, ganz besonders bevorzugt 90 bis 100 Gew.-%, wiederum besonders bevorzugt 100 Gew.-%, bezogen auf das Gesamtgewicht der die Klebharzkomponente b) wenigstens eines Klebharzes mit den vorstehend beschriebenen Merkmalen umfasst.

Es sind auch Klebharze mit einem MMAP-Trübungspunkt unterhalb 65 °C oder sogar unterhalb 50 °C und/oder einem DACP-Trübungspunkt unterhalb 25 °C oder sogar unterhalb 15 °C mit einem Anteil in Bezug auf die Zusammensetzung der Klebharzkomponente von bis zu 20 Gew.-% oder sogar bis zu 40 Gew.-% einsetzbar. Beispiele für solche Klebharze sind Terpenphenolharze insbesondere mit einer OH-Zahl von höchstens 100 mg KOH / g und Kolophoniumester, die teilweise hydriert, vollhydriert oder disproportioniert sein können.

Die definierten Merkmale gelten für alle als Klebharzkomponente (b) enthaltenen Klebharze, da die Klebharzkomponente (b) bevorzugt bereits so definiert ist, dass sie das wenigstens eine -näher spezifizierte - Klebharz ist.

### (c) Verstärkungskomponente

Die erfindungsgemäße Haftklebemasse enthält optional, aber bevorzugt, eine Verstärkungskomponente (c).

Die Verstärkungskomponente ist wenigstens ein Harz mit einem MMAP-Wert zwischen - 10 °C und +30 °C, und einem Erweichungspunkt von mindestens 140 °C.

Die Verstärkungskomponente ist im Rahmen der vorliegenden Erfindung nicht als Klebharzkomponente zu verstehen, d.h. die Verstärkungskomponente ist bevorzugt im Wesentlichen nicht mit den Weichblöcken, d.h. den hydrierten Polydien-Blöcken verträglich.

Als Verstärkungskomponente werden erfindungsgemäß insbesondere sogenannte Endblockverstärker eingesetzt.

Unter Endblockverstärkern sind solche Materialien zu verstehen, die im Wesentlichen mit den Hartblöcken der hydrierten Polydien-Blockcopolymere verträglich sind.

Das wenigstens eine Harz der Verstärkungskomponente ist vorzugsweise wenigstens ein Harz basierend auf wenigstens einer, insbesondere aromatischen, Kohlenwasserstoffverbindung, die bevorzugt ausgewählt ist aus der Gruppe bestehend aus Styrol, alpha-Methylstyrol, para-Methylstyrol und Copolymeren daraus. Unter "Copolymeren daraus" ist eine Kohlenwasserstoffverbindung zu verstehen, die auf einer Mischung mindestens zweier der zuvor genannten Monomere basiert.

Das wenigstens eine Harz der Verstärkungskomponente weist vorzugsweise ein gewichtsmittleres Molekulargewicht M_{w} von 1.000 g/mol bis 15.000 g/mol, bevorzugt 2.000 g/mol bis 10.000 g/mol, bestimmt mittels GPC (Test xi-b), auf.

Das wenigstens eine Harz der Verstärkungskomponente weist einen MMAP-Trübungspunkt (Mixed Methylcyclohexan Anilin Cloud Point, Test x) von -10 °C bis +30 °C, bevorzugt von 0 °C bis +20 °C, auf.

Der Erweichungspunkt des wenigstens einen Harzes der Verstärkungskomponente liegt bei mindestens 140 °C, bevorzugt bei mindestens 150 °C, bestimmt gemäß Test viii. Bevorzugt beträgt die Erweichungstemperatur des wenigstens einen Harzes der Verstärkungskomponente (c) höchstens 170 °C.

Der Anteil der Verstärkungskomponente, bezogen auf das Gesamtgewicht der Haftklebemasse liegt bevorzugt bei mindestens 2,5 Gew.-% und höchstens 18 Gew.-%, sehr bevorzugt bei mindestens 2,5 Gew.-% und höchstens 15 Gew.-%, weiter bevorzugt von mindestens 3,5 Gew.-% bis 8 Gew.%.

Unter dem Ausdruck "im Wesentlichen unverträglich" oder "im Wesentlichen nicht verträglich" wird im Rahmen der vorliegenden Erfindung insbesondere verstanden, dass die angesprochenen Bestandteile bzw. Komponenten zu höchstens 10 Gew.-%, bevorzugt zu höchstens 5 Gew.-%, miteinander mischbar sind.

Unter dem Ausdruck "im Wesentlichen verträglich" wird im Rahmen der vorliegenden Erfindung insbesondere verstanden, dass die angesprochenen Bestandteile bzw. Komponenten zu mindestens 90 Gew.-%, bevorzugt zu mindestens 95 Gew.-%, miteinander mischbar sind.

### (d) Weichmacherkomponente

Neben der Elastomerkomponente und der Klebharzkomponente kann die erfindungsgemäße Haftklebemasse weiterhin eine Weichmacherkomponente (d) enthalten.

Der Anteil an Weichmacherkomponente, bezogen auf das Gesamtgewicht der Haftklebemasse, beträgt dabei bevorzugt 0,5 bis 25 Gew.-%, besonders bevorzugt 2 bis 18 Gew.-%, ganz besonders bevorzugt 4 bis 15 Gew.-%. Es hat sich überraschend gezeigt, dass ein bereits geringer Weichmacherkomponentenanteil in den genannten Mengen ausreichend ist, um eine Haftklebemasse mit einer ausreichend hohen Verklebungsfestigkeit zu erhalten, was im Gegensatz zu dem steht, was der Stand der Technik lehrt, wo zum Teil von einem Gehalt an Weichmachern von 60 bis 95 Gew.-% ausgegangen wird.

Die Weichmacherkomponente ist ein oder mehrere Weichmacher.

Der Weichmacher ist vorzugsweise ausgewählt aus der Gruppe bestehend aus Ethylen/Propylen-Copolymer, Ethylen/Butylen-Copolymer, Butylen/iso-Butylen-(Co)-Polymer, Butylenhomopolymer und iso-Butylenhomopolymer, wobei jeweils die amorphen Vertreter bevorzugt sind, und Mineralöl, insbesondere paraffinischem und naphthenischem.

In einer weiterhin bevorzugten Ausführungsform weist der Weichmacher eine gewichtsmittlere Molekularmasse, bestimmt mittels GPC (Test xi-b), von mindestens 100.000 g/mol und höchstens 1.000.000 g/mol auf. In diesen Fällen ist der Weichmacher vorzugweise ein Ethylen/Propylen-Copolymer oder Ethylen/Butylen-Copolymer mit linearer oder radialer Struktur. Diese als Weichmacherkomponente enthaltenden Copolymere sind im Rahmen der vorliegenden Erfindung keine Blockcopolymere, die Hartblöcke enthalten.

In einer weiteren besonders bevorzugten Ausführungsform weist der Weichmacher eine gewichtsmittlere Molmasse, bestimmt mittels GPC (Test xi-b), von mindestens 1.500 g/mol, bevorzugt mindestens 3.000 g/mol, und höchstens 20.000 g/mol auf. In diesem Fall handelt es sich bei dem Weichmacher vorzugsweise um ein Butylen/iso-Butylen-(Co)-Polymer.

Geeignet sind auch Weichharze auf Basis von Kolophonium, insbesondere Methylestern des Kolophoniums oder des teil- oder vollhydrierten Kolophoniums.

Im Fall von Weichharzen in der Weichmacherkomponente weisen diese bevorzugt eine Erweichungstemperatur, bestimmt nach ASTM E28, von weniger als 30 °C auf. Hiermit sind sie von der Verstärkerkomponente und von der Klebharzkomponente unterscheidbar.

### (e) Schäumung

Die Haftklebemasse der wenigstens einen Haftklebemasseschicht H1 ist geschäumt. Die Schäumung kann prinzipiell mit jeglichen dem Fachmann bekannten physikalischen oder chemischen Methoden erzeugt sein.

Bevorzugt beträgt die Dichte der Haftklebemasseschicht H1 nach der Schäumung 500 bis 850 kg/m³, besonders bevorzugt 500 bis 800 kg/m³, und gemäß besonders vorteilhafter Ausführungsformen 600 bis 800 kg/m³. Die Dichte wird im Rahmen der vorliegenden Erfindung auf dem Fachmann bekannte Weise und gemäß Methodenbeschreibung Test xiii bestimmt.

Als Schäumungsmittel kann beispielsweise ein physikalisches Treibmittel verwendet werden. Entsprechende Treibmittel können einzeln oder als Mischung verschiedener Treibmittel zum Einsatz kommen. Treibmittel können aus einer großen Anzahl Materialien ausgewählt werden, die folgendes umfasst: Kohlenwasserstoffe, Ether und Ester und ähnliches. Typische physikalische Treibmittel weisen einen Siedepunkt im Bereich von - 50° C bis +100 °C, und vorzugsweise von -50 °C bis +50 °C auf. Bevorzugte physikalische Treibmittel umfassen Kohlenwasserstoffe wie n-Pentan, Isopentan und Cyclopentan, Methylenchlorid oder beliebige Kombinationen der vorstehend genannten Verbindungen. Solche Treibmittel können bevorzugt in Mengen von 5 Gew.-% bis 50 Gew.-% des zu schäumenden Gemischs, insbesondere von 10 Gew.-% bis 30 Gew.-% des zu schäumenden Gemischs eingesetzt werden. Unter "zu schäumendem Gemisch" wird hier die Gesamtmasse aus ungeschäumter Haftklebemasse und entsprechendem Treibmittel bezeichnet.

Physikalische Schäumung ist auch durch Einarbeiten von Gasen wie insbesondere Kohlendioxid oder Stickstoff möglich.

Ebenso ist es möglich, zusätzlich oder alternativ ein chemisches Treibmittel zu verwenden. Chemische Treibmittel sind Substanzen, die erst während des Verarbeitungsprozesses aufgrund einer chemischen Reaktion - meist eingeleitet durch Wärmezufuhr - Gas abspalten und dadurch die Erzeugung einer Schaumstruktur im Polymer ermöglichen. Ursache für die Gasabspaltung kann entweder die thermische Zersetzung des Treibmittels oder eine chemische Reaktion verschiedener im Treibmittel enthaltener Substanzen sein. Das entstehende Gas ist zumeist N₂, CO₂ oder CO.

Besonders bevorzugt handelt es sich bei dem Schäumungsmittel um Mikroballons (im Rahmen der vorliegenden Ausführung auch kurz als "µ-Ballons" bezeichnet). Insbesondere bei Verwendung eines solchen Schäumungsmittels hat sich überraschend gezeigt, dass trotz der Schäumung eine Verbesserung in der Reißerbeständigkeit erzielt wird.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, Polyvinylidenchlorid (PVDC), Polyvinylchlorid (PVC) oder Polyacrylat Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe, vorzugsweise 5 bis 45 µm Durchmesser im unexpandierten Zustand, und ihre zur Expansion benötigten Starttemperaturen, vorzugsweise 75 bis 220 °C, differenzieren. Ein Beispiel für kommerziell erhältliche Mikroballons sind die Expancel^{®} DU-Typen (DU = dry unexpanded) von der Firma Nouryon, ein anderes Matsumoto Microsphere^{®} F/FN von der Firma Matsumoto Yushi Seiyaku.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 50 Gew.-%.

Bevorzugt ist die Haftklebemasse damit mittels Expansion expandierbarer Mikroballons geschäumt.

Der Anteil der expandierbaren Mikroballons beträgt vor der Expansion bevorzugt mindestens 1,8 Gew.-%, besonders bevorzugt 2 bis 10 Gew.-%, jeweils bezogen auf das Gesamtgewicht der ungeschäumten Haftklebemasse.

Neben expandierbaren Mikrohohlkugeln können zusätzlich auch nicht-expandierbare Mikrohohlkugeln enthalten sein. Mikrohohlkugeln können auch partiell, also nicht vollständig expandiert vorliegen.

Geeignet sind außerdem - unabhängig gewählt von anderen Additiven - Polymervollkugeln, Glashohlkugeln, Glasvollkugeln, keramische Hohlkugeln, keramische Vollkugeln und/oder Kohlenstoffvollkugeln ("Carbon Micro Balloons").

### (f) weitere Zuschlagstoffe

Um das Eigenschaftsprofil der erfindungsgemäßen Haftklebemasse weiter anzupassen, können der Haftklebemasse weitere Zuschlagstoffe beigefügt werden. Dabei handelt es sich vorzugsweise um solche, die ausgewählt sind aus der Gruppe bestehend aus primären Antioxidantien wie sterisch gehinderten Phenolen, sekundären Antioxidantien wie Phosphite oder Thioether, Prozessstabilisatoren wie C-Radikalfänger, Lichtschutzmitteln wie UV-Absorber oder sterisch gehinderten Aminen, sowie Verarbeitungshilfsmitteln. Des Weiteren können organische oder anorganische Füllstoffe eingesetzt werden sowie Farbstoffe und Farbpigmente. Die Haftklebemasse kann entsprechend schwarz, grau, weiß oder farbig sein.

### Selbstklebeprodukt

Der Gegenstand der vorliegenden Erfindung ist wie ausgeführt ein durch dehnendes Verstrecken wiederablösbarer Selbstklebeartikel, der zumindest eine Schicht H1 der beschriebenen Haftklebemasse aufweist.

Der erfindungsgemäße Selbstklebeartikel kann dabei einseitig oder beidseitig, d.h. doppelseitig, klebend ausgestaltet sein, wobei die klebende Schicht bevorzugt jeweils aus der beschriebenen Haftklebemasse als Haftklebemasseschicht H1 wie definiert gebildet wird.

Gemäß bevorzugter Ausführungsformen der Erfindung handelt es sich bei dem erfindungsgemäßen Selbstklebeartikel um ein Transferklebeband der Haftklebemasseschicht H1.

Gemäß weiterer bevorzugter Ausführungsformen der Erfindung weist der erfindungsgemäße Selbstklebeartikel zusätzlich zumindest eine Lage eines dehnbaren Permanentträgermaterials auf.

Gemäß bevorzugter Ausführungsformen der Erfindung weist der erfindungsgemäße Selbstklebeartikel bevorzugt zumindest eine Lage eines temporären Trägermaterials ("Trennliner") auf.

Bei diesem temporären Trägermaterial handelt es sich insbesondere um ein filmförmiges Material, von dem eine Haftklebemasseschicht abgelöst werden kann, so dass der übrige Teil des Selbstklebeartikels anschließend mit einem zu verklebenden Substrat oder einem anderen Material, das mit dem übrigen Teil des Selbstklebeartikels einen Verbund bilden soll, in Kontakt gebracht werden kann.

Bei dem temporären Trägermaterial handelt es sich insbesondere um ein Trennpapier oder eine Trennfolie auch Trenn- oder Releaseliner genannt, jedenfalls um ein nicht fest mit der Haftklebemasseschicht verbundenes Material, das insbesondere abhäsiv ausgerüstet ist, so dass ein Ablösen einer Haftklebemasseschicht von ihm ermöglicht wird. Es stellt daher ein Hilfsmittel zu dessen Herstellung, Lagerung oder für die Weiterverarbeitung beispielsweise durch Stanzen dar.

Unter Verwendung der zumindest einen vorgenannten Haftklebemasse ist der erfindungsgemäße Selbstklebeartikel gemäß bevorzugter Ausführungsformen der Erfindung
- ein einschichtiges, beidseitig selbstklebendes Klebeband, bestehend aus einer einzigen Schicht H1 der beschriebenen Haftklebemasse und damit ein, sogenanntes "Transklebeband", oder
- ein mehrschichtiges, beidseitig selbstklebendes Klebeband, bei denen die Schichten jeweils aus der beschriebenen Haftklebemasse bestehen, sodass das Klebeband zwei Schichten H1 aufweist, oder
- ein mehrschichtiges, beidseitig selbstklebendes Klebeband mit einem Permanentträger, der entweder in einer Schicht aus der beschriebenen Haftklebemasse oder zwischen zwei Schichten aus der beschriebenen Haftklebemasse angeordnet ist,
- ein mehrschichtiges, einseitig selbstklebendes Klebeband mit einer Schicht aus der beschriebenen Haftklebemasse und einem Permanentträger,
- jeweils in Kombination mit einem temporären Trägermaterial.

Ein Gegenstand der vorliegenden Erfindung ist daher auch ein Selbstklebeartikel mit einem temporären Trägermaterial und einem Permanentträger, auf den mindestens eine Schicht H1 der beschriebenen Haftklebemasse aufgebracht ist.

Ebenfalls Gegenstand der Erfindung ist ein Selbstklebeartikel mit einem temporären Trägermaterial und einem Permanentträger, auf den auf beiden Seiten eine Schicht H1 der beschriebenen Haftklebemasse aufgebracht ist, wobei die beiden Schichten H1 innerhalb der gegebenen Bestandteile aus gleicher oder verschiedenen Haftklebemassen bestehen können. Darüber hinaus ist Gegenstand der Erfindung ein Selbstklebeband mit einem temporären Trägermaterial und einem Permanentträger, auf den auf einer Seite eine Schicht einer beschriebenen Haftklebemasse aufgebracht ist und auf der anderen Seite eine weitere, von der beschriebenen Haftklebemasse unterscheidbare Klebemasse aufgebracht ist. Letztere kann haftklebrig oder nicht haftklebrig beziehungsweise heißsiegelfähig sein.

Dabei können die doppelseitigen Produkte also einen symmetrischen oder einen asymmetrischen Produktaufbau aufweisen.

Bevorzugt sind auch einschichtige, beidseitig selbstklebende Klebebänder aus einer einzigen Schicht einer beschriebenen Haftklebemasse in Kombination mit einem temporären Trägermaterial.

Bevorzugt ist zudem eine Ausführungsform des Selbstklebeartikels, bei dem der Permanentträger nur aus einer einzigen Schicht aus einer Polymerfolie besteht.

Weiterhin ist ein Selbstklebeartikel bevorzugt, welcher mehrschichtig, einseitig aus wenigstens einer Schicht H1 aus der beschriebenen Haftklebemasse und einem Permanentträger aufgebaut ist. Die beschriebene Haftklebemasse stellt dabei bevorzugt die nach außen gerichtete klebrige Schicht des Selbstklebeartikels dar, sodass sie - unabhängig von einem temporären Trägermaterial - zur Verklebung auf ein Substrat zur Verfügung steht.

Bei dem Permanentträger sämtlicher Ausführungsformen handelt es sich vorzugweise um eine Folie, insbesondere eine dehnfähige Folie.

Insbesondere vom erfinderischen Gedanken umfasst sind Aufbauten mit einem dehnbaren Permanentträger in der Mitte des Selbstklebeartikels, insbesondere in der Mitte einer einzigen Schicht der beschriebenen Haftklebemasse, wobei die Dehnbarkeit des Zwischenträgers ausreichend sein muss, um ein Ablösen des Klebstreifens durch dehnendes Verstrecken zu gewährleisten. Als Permanentträger können zum Beispiel sehr dehnfähige Folien dienen. Beispiele für vorteilhaft einsetzbare dehnbare Permanentträger sind transparente Ausführungen aus WO 2011/124782 A1, DE 10 2012 223 670 A1, WO 2009/114683 A1, WO 2010/077541 A1, WO 2010/078396 A1.

Der Permanentträger braucht aber nicht transparent zu sein. Er kann vor allem auch schwarz, grau, weiß oder farbig sein.

Zur Herstellung der Permanentträgerfolie werden vorzugsweise filmbildende oder extrusionsfähige Polymere eingesetzt, die zusätzlich mono- oder biaxial orientiert sein können.

Gemäß bevorzugter Ausführungsformen ist das dehnbare Permanentträgermaterial eine dehnfähige Folie.

Gemäß bevorzugter Ausführungsformen ist die Folie aus wenigstens einem Polyolefin. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern wie zum Beispiel die Erweichungstemperatur und/oder die Reißfestigkeit.

Vorzüglich lassen sich zudem Polyurethane als Ausgangsmaterialien für dehnbare Permanentträgerschichten verwenden. Polyurethane sind chemisch und/oder physikalisch vernetzte Polykondensate, die typischerweise aus Polyolen und Isocyanaten aufgebaut werden. Je nach Art und Einsatzverhältnis der einzelnen Komponenten sind dehnbare Materialien erhältlich, die im Sinne dieser Erfindung vorteilhaft eingesetzt werden können. Rohstoffe, die dem Formulierer hierzu zur Verfügung stehen, sind zum Beispiel in EP 0 894 841 B1 und EP 1 308 492 B1 genannt.

Dem Fachmann sind weitere Rohstoffe bekannt, aus denen erfindungsgemäße Permanentträgerschichten aufgebaut werden können. Polyesterpolyurethane, Polyetherpolyurethane und Polycaprolactonpolyurethane seien hier als Beispiele für Polyurethane genannt, die vorteilhaft im Sinne dieser Erfindung als Grundmaterial für Permanentträger genutzt werden können.

Weiterhin ist es vorteilhaft, auf Ethylenvinylacetat-Copolymere (EVA) basierende Materialien in Permanentträgerschichten einzusetzen, um Dehnbarkeit zu realisieren.

Bevorzugt ist daher ein erfindungsgemäßer Selbstklebeartikel, welcher als dehnbares Permanentträgermaterial wenigstens eine dehnfähige Folie aufweist, welche bevorzugt aus wenigstens einem Material ist, welches ausgewählt ist aus der Gruppe bestehend aus Polyolefinen, wie Ethylen, Propylen, Butylen und Hexylen, Polyurethanen, Polyesterpolyurethanen, Polyetherpolyurethanen, Polycaprolactonpolyurethanen, Ethylenvinylacetat-Copolymeren (EVA) und auf Kautschuk basierenden Materialien.

Die Folie kann zudem geschäumt sein.

Zur Herstellung eines Permanentträgers kann es angebracht sein, Additive und weitere Komponenten hinzuzugeben, die die filmbildenden Eigenschaften verbessern, sofern vorhanden und gewünscht die Neigung zur Ausbildung von kristallinen Segmenten vermindern und/oder die mechanischen Eigenschaften gezielt verbessern oder auch gegebenenfalls verschlechtern.

Die Permanentträger können mehrlagig ausgestaltet sein.

Des Weiteren können der oder die Permanentträger Deckschichten aufweisen, beispielsweise Sperrschichten, die ein Eindringen von Komponenten aus der Klebemasse in den Permanentträger oder umgekehrt unterbinden. Diese Deckschichten können auch Barriereeigenschaften haben, um so ein Durchdiffundieren von Wasserdampf und/oder Sauerstoff zu verhindern.

Zur besseren Verankerung der Haftklebemassen auf dem Permanentträger können die Permanentträger mit den bekannten Maßnahmen wie Corona, Plasma oder Flammen vorbehandelt werden. Auch die Nutzung eines Primers ist möglich. Idealerweise kann aber auf eine Vorbehandlung verzichtet werden.

Die Rückseite des Permanentträgers kann einer antiadhäsiven physikalischen Behandlung oder Beschichtung unterzogen sein.

Die Dicke der Permanentträgerschicht liegt typischerweise im Bereich von 10 bis 200 µm, bevorzugt zwischen 20 und 100 µm.

Anstelle des Begriffes "Selbstklebeartikel" wird im Rahmen der vorliegenden Erfindung auch der Begriff "Selbstklebeprodukt" verwendet.

Die allgemeinen Ausdrücke "Selbstklebeartikel", "Selbstklebeprodukt" und "selbstklebendes Klebeband" umfassen im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Zuschnitte, Stanzlinge oder Etiketten.

Das Selbstklebeprodukt weist somit eine Längsausdehnung und eine Breitenausdehnung auf. Das Klebeband weist auch eine senkrecht zu beiden Ausdehnungen verlaufende Dicke auf, wobei die Breitenausdehnung und Längsausdehnung um ein Vielfaches größer sein können als die Dicke. Die Dicke ist über die gesamte durch Länge und Breite bestimmte Flächenausdehnung des Selbstklebeprodukts möglichst gleich, vorzugsweise im Wesentlichen gleich.

Typische Konfektionierformen des erfindungsgemäßen Selbstklebeproduktes sind Klebebandrollen sowie Selbstklebestreifen, wie sie zum Beispiel in Form von Stanzlingen erhalten werden. Vorzugsweise weisen alle Schichten im Wesentlichen die Form eines Quaders auf. Weiter vorzugsweise sind alle Schichten vollflächig miteinander verbunden.

Gemäß vorteilhafter Ausführungsformen der Erfindung weist der Selbstklebeartikel ein Aspektverhältnis Länge/Breite von ≥ 15, sehr bevorzugt von ≥ 25 auf. Dies bedeutet zum Beispiel, dass er eine Länge von 75 mm bei einer Breite von 5 mm oder eine Länge von 75 mm bei einer Breite von 3 mm aufweisen kann.

Ein derartiger Selbstklebeartikel mit einer gegenüber der Länge vergleichsweise geringen Breite ist insbesondere als Rahmenverklebung von größerflächigen Elementen geeignet. Bei einer derartigen Geometrie stellt die ausreichende Reißerbeständigkeit bei gleichzeitig guten Klebeigenschaften eine besondere Herausforderung dar. Gerade bei den genannten Anwendungen ist es jedoch von besonderem Interesse, den Selbstklebeartikel durch dehnendes Verstrecken wieder lösen zu können, um schließlich die Verklebung wieder lösen zu können.

Dies erleichtert das Recycling von verklebten Verbunden und reduziert bereits bei der Herstellung von verklebten Verbunden Ausschussware, da bei Mängeln die Verklebung neu hergestellt werden kann, ohne dass das verklebte größerflächige Element vernichtet werden muss.

Optional kann ein nicht haftklebriger Anfasserbereich vorgesehen sein, von welchem aus der Ablöseprozess ausgeführt werden kann.

Das Selbstklebeprodukt weist vorzugsweise eine Dicke auf von 100 µm bis 2000 µm, weiter vorzugsweise von 150 bis 1500 µm, besonders vorzugsweise 200 bis 1000 µm oder 250 µm, 300 µm, 500 µm oder 800 µm, wobei das temporäre Trägermaterial nicht eingerechnet ist.

Bevorzugt ist eine Ausführungsform des Selbstklebeprodukts, bei dem der Permanentträger eine Dicke zwischen 20 und 120 µm, bevorzugt 30 µm bis 80 µm, aufweist und identische erfindungsgemäße Haftklebemasseschichten auf dem Permanentträger jeweils eine Dicke zwischen 20 und 200 µm, bevorzugt 30 µm bis 100 µm, aufweisen.

Bevorzugt ist zudem eine Ausführungsform des Selbstklebeprodukts, bei dem kein Permanentträger enthalten ist und eine erfindungsgemäße Haftklebemasse als singuläre Schicht auf einem temporären Trägermaterial vorliegt. Die Haftklebemasseschicht weist bevorzugt eine Dicke zwischen 100 µm und 2000 µm, insbesondere zwischen 150 µm und 1500 µm oder zwischen 200 µm und 1200 µm auf.

Vorzugsweise lässt sich das erfindungsgemäße durch dehnendes Verstrecken wiederablösbare Selbstklebeprodukt entfernen, indem dieses bevorzugt im Wesentlichen in der Verklebungsebene, das heißt bei einem Abzugswinkel von etwa 0°, dehnend verstreckt wird, wodurch es sich rückstands- und zerstörungsfrei wiederablösen lässt. Eine Entfernung ist aber auch unter anderen Abzugswinkeln wie 45° oder 90° möglich. Der Ablöseprozess kann manuell oder maschinell (beispielsweise durch angetriebenes Aufspulen) erfolgen.

### Herstellverfahren

Die Haftklebemasse für das erfindungsgemäße Selbstklebeprodukt wird entweder auf eine Seite eines temporären Trägermaterials oder auf eine Seite eines Permanentträgers aufgebracht. Die Haftklebemasse kann nach dem Fachmann bekannten Verfahren auf den Träger aufgebracht werden, beispielsweise mittels Rakelverfahren, Düsenrakelverfahren, Rollstabdüsenverfahren, Extrusionsdüsenverfahren, Gießdüsen- und Gießverfahren. Ebenfalls erfindungsgemäß sind Auftragsverfahren wie Walzenauftragsverfahren, Druckverfahren, Siebdruckverfahren, Rasterwalzenverfahren, Inkjetverfahren und Sprühverfahren.

Eine bevorzugte Beschichtungsvariante ist lösemittelbasiert. Hierzu werden die Bestandteile der Haftklebemasse(n) in einem geeigneten Lösemittel oder Lösemittelgemisch aufgelöst, und sofern vorgesehen die Mikroballons beispielsweise in Form einer lösemittelhaltigen Schlämme zugegeben und dann aus lösungsmittelhaltiger Zubereitung beschichtet und das beschichtete Material getrocknet. Geeignete Lösemittel, die auch in Kombination eingesetzt werden können, sind aliphatische (beispielsweise Pentan, Hexan, Heptan, Octan und deren Strukturisomere), cycloaliphatische (beispielsweise Cyclohexan und Methylcyclohexan) und aromatische Kohlenwasserstoffe (beispielsweise Toluol, Xylol), insbesondere in Kombination mit Ketonen (beispielsweise Aceton, 2-Butanon, iso-Butylketon) oder Estern (beispielsweise Ethylacetat, Butylacetat, Propylacetat, iso-Propylacetat). In vorteilhafter Vorgehensweise wird eine Mischung aus Toluol und Ethylacetat verwendet. Sehr vorteilhaft ist eine Mischung aus Methylcyclohexan und einem Ester wie Ethylacetat oder insbesondere Butylacetat. Vorteilhaft ist zudem eine Mischung aus Cyclohexan und einem Ester, insbesondere Butylacetat.

Eine weitere bevorzugte Herstellvariante sind Hotmelt-Verfahren, bei denen die Haftklebemasse mittels eines Compoundieraggregats gemischt und insbesondere direkt im Anschluss ("inline") mittels Extrusion und/oder Düse und/oder Kalander auf das Trägermaterial aufgebracht wird. Es muss sich bei dem Verfahren zum Aufbringen jedoch nicht um eine Direktbeschichtung handeln. Die Haftklebemasse kann auch zunächst anderweitig beschichtet werden und in einem zweiten Schritt auf den Träger kaschiert werden. Gegebenenfalls können weitere Schichten oder Materiallagen anschließend inline oder offline zukaschiert oder beschichtet werden, so dass auch mehrschichtige /-lagige Produktaufbauten erzeugt werden können. Solche weiteren Schichten können spezielle zusätzliche Eigenschaften in das Selbstklebeprodukt einbringen wie zum Beispiel die mechanischen Eigenschaften. Sie können auch die Verankerung zwischen Klebemasse und Träger fördern oder die Migration einzelner Bestandteile aus einer Schicht in die andere unterdrücken.

Für Produktaufbauten mit Permanentträger kann eine Haftklebemasseschicht durch direkte Beschichtung auf das Permanentträgermaterial oder durch Laminierung, insbesondere Heißlaminierung erfolgen.

Je nach Art der Schäumung, also insbesondere ob physikalisch durch ein Gas, oder durch Zusatz eines physikalischen oder chemischen Schäumungsmittels, wird dieses an einer geeigneten Stelle im Herstellverfahren eingebracht.

Im Fall von zunächst ungeschäumten Mikroballons werden diese der Haftklebemasse zugegeben, und zum gewünschten Zeitpunkt die Schäumung, insbesondere durch Erwärmen, herbeigeführt. Dies kann nach der Beschichtung der Haftklebemasse geschehen oder die Haftklebemasse kann bereits als geschäumte Masse extrudiert werden, wobei die Mikroballons dem Extruder an einem geeigneten Punkt auf dem Fachmann bekannte Weise zugegeben werden.

Weitere Details zu Verfahrensschritten können insbesondere der DE 102008004388 A1 entnommen werden.

### Verwendung

Schließlich umfasst die vorliegende Erfindung auch die Verwendung des erfindungsgemäßen Selbstklebeartikels zur Verklebung im Automobilbereich, insbesondere zur Verklebung von großflächigen Funktionselementen, sowie zur Verklebung von Bauteilen in elektronischen, optischen oder feinmechanischen Geräten, medizinischen Geräten und zahnmedizinischen Geräten.

Bevorzugt ist die Verwendung des erfindungsgemäßen Klebebandes zur Herstellung von Verklebungen auf Materialien ausgewählt aus Metall, Glas, lackiertem oder auf sonstige Weise beschichtetem Glas, Keramik, Kunststoff und metallisiertem Kunststoff und die Verwendung des erfindungsgemäßen Klebebandes als Klebemittel in der Herstellung elektronischer, optischer und/oder feinmechanischer Geräte.

Derartige Geräte sind insbesondere:
Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems;
Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads");
Monitore, Displays, Bildschirme, berührungsempfindliche Bildschirme (Sensorbildschirme, "Touchscreen-Geräte"), Beamer;
Lesegeräte für elektronische Bücher ("E-Books");
Kleinfernsehgeräte, Taschenfernseher, Filmabspielgeräte, Videoabspielgeräte Radios (auch Klein- und Taschenrundfunkgeräte), Walkmen, Discmen, Musikabspielgeräte für zum Beispiel CD, DVD, Blue-Ray, Kassetten, USB, MP3, Kopfhörer Schnurlose Telefone, Mobiltelefone, Smartphones, Funksprechgeräte, Freisprechgeräte, Personenrufgeräte (Pager, Pieper);
Mobile Defibrillatoren, Blutzuckermessgeräte, Blutdruckmessgeräte, Schrittzähler, Pulsmesser;
Taschenlampen, Laserpointer;
Mobile Detektoren, optische Vergrößerungsgeräte, Fernsichtgeräte, Nachtsichtgeräte, GPS-Geräte, Navigationsgeräte, tragbare Schnittstellengeräte der Satellitenkommunikation;
Datenspeichergeräte (USB-Sticks, externe Festplatten, Speicherkarten); und Armbanduhren, Digitaluhren, Taschenuhren, Kettenuhren, Stoppuhren.

Die vorliegende Erfindung wird anhand der folgenden Beispiele näher erläutert, wobei diese keinesfalls als Einschränkung des Erfindungsgedanken zu verstehen sind.

### Methodenteil - Beschreibung der Testmethoden

Die Messungen werden - soweit nicht ausdrücklich anders erwähnt - bei einem Prüfklima von 23 ± 1 °C und 50 ± 5 % relativer Luftfeuchte durchgeführt.

### Test i - Verklebungsfestigkeit (Klebkraft)

Die Bestimmung der Klebkraft (gemäß AFERA 5001) wird wie folgt durchgeführt. Als definierter Haftgrund wird eine polierte Stahlplatte mit einer Stärke von 2 mm eingesetzt. Das zu untersuchende verklebbare Flächenelement in der angegebenen Schichtdicke (z.B. 500 µm Haftklebeschicht als Transferklebeschicht rückseitig mit einer 75 µm PolyesterFolie verstärkt) wird, falls nicht anderweitig angegeben, auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. 20 min nach Aufbringung wird das verklebte Flächenelement in einem Winkel von 180° vom Haftgrund mit einem Zugprüfungsgerät (Firma Zwick) mit einer Geschwindigkeit v = 300 mm/min abgezogen und die hierfür bei Raumtemperatur benötigte Kraft gemessen. Der Messwert (in N/cm) ergibt sich als Mittelwert aus drei Einzelmessungen.

### Test ii - Wärmescherfestigkeit (SAFT)

Dieser Test dient der Schnellprüfung der Scherfestigkeit von Klebeformulierungen unter Temperaturbelastung. Dafür wird ein zu untersuchendes Prüfmuster auf eine temperierbare Stahlplatte geklebt, mit einem Gewicht (50 g) belastet und die Scherstrecke aufgezeichnet.

Messprobenpräparation:
Das zu untersuchende Prüfmuster in der angegebenen Schichtdicke (z.B. 500 µm rückseitig mit Aluminium-Folie verstärkt) wird auf eine Größe von 10 mm * 50 mm geschnitten.

Die zugeschnittene Klebebandprobe wird mit der anderen Klebemassenseite auf eine polierte, mit Aceton gereinigte Prüfplatte (Werkstoff 1.4301, DIN EN 10088-2, Oberfläche 2R, Oberflächen-Rauigkeit Rₐ = 30 bis 60 nm, Abmessungen 50 mm * 13 mm * 1,5 mm) derart verklebt, dass die Verklebungsfläche der Probe Höhe * Breite = 13 mm * 10 mm beträgt und die Prüfplatte am oberen Rand um 2 mm überragt. Anschließend wird mit einer 2 kg-Stahlrolle und einer Geschwindigkeit von 10 m/min zur Fixierung sechsmal überrollt. Die Probe wird oben bündig mit einem stabilen Klebestreifen verstärkt, der als Auflage für den Wegmessfühler dient. Dann wird die Probe mittels der Platte derart aufgehängt, dass das länger überstehende Ende des Prüfmusters senkrecht nach unten zeigt.

Messung:
Die zu messende Probe wird am unteren Ende mit einem Gewicht von 50 g belastet. Die Prüfplatte mit der verklebten Probe wird beginnend bei 25 °C mit einer Rate von 9 K/min auf die Endtemperatur von 200 °C aufgeheizt.

Beobachtet wird der Rutschweg der Probe mittels Wegmessfühler in Abhängigkeit von Temperatur und Zeit. Der maximale Rutschweg ist auf 1000 µm (1 mm) festgelegt, bei Überschreiten wird der Test abgebrochen und die Versagenstemperatur notiert. Prüfklima: Raumtemperatur 23 +/- 3 °C, relative Luftfeuchtigkeit 50 +/- 5%. Das Ergebnis ist der Mittelwert aus zwei Einzelmessungen und wird in °C angegeben.

### Test iii - Reißerbeständigkeit

Für die Reißerbeständigkeitstests werden folgendermaßen Klebebandmuster hergestellt. Haftklebebeschichtungen in der angegebenen Schichtdicke werden als einschichtige Klebestreifenmuster getestet. Aus dem zu untersuchenden Klebeband werden 10 Streifen entsprechend der unter iiia), iiib) und iiic) angegebenen Formate erzeugt. Diese Streifen werden, nebeneinander und voneinander beabstandet, derart auf eine mit Ethanol vorgereinigte, getrocknete und bei 23 °C und 50 % relativer Luftfeuchtigkeit konditionierte Testplatte geklebt, so dass ein 10 mm langer Anfasser übersteht

Eine zweite Testplatte wird auf die zweite Fläche der verklebten Streifen aufgebracht, und zwar so, dass die beiden Testplatten bündig übereinander liegen. Der Verbund wird mit einer 4 kg Rolle 10-fach überrollt (fünfmal hin und zurück). Die Testverbünde werden nach unten weiter spezifizierter Aufziehzeit und Lagerung vor der Reißerbeständigkeitsmessung bei 23 °C und 50 % relativer Luftfeuchtigkeit für 24 h rekonditioniert, bevor die Streifen am Anfasser manuell im 180°-Winkel aus der Klebfuge gestrippt werden.

Es wird bewertet, wie viele Muster rückstandsfrei wieder abgelöst werden können. Reißerbeständigkeit wird prozentual im Hinblick auf nicht gerissene Klebestreifen angegeben. 100 % entspricht dabei dem Fall, dass zum Beispiel von 10 Klebestreifen keiner beim durch dehnendes Verstrecken durchgeführten Ablöseversuch gerissen ist. 80 % entspricht dabei zum Beispiel dem Fall, dass von 10 Klebestreifen 8 Klebestreifen beim durch dehnendes Verstrecken durchgeführten Ablöseversuch nicht gerissen sind.

Methode iiia): Die Streifen werden in jeweils 12 mm Breite und 55 mm Länge präpariert, welche an einer Seite über eine Länge von 10 mm an einem schmalen Ende als gleichschenkliges Dreieck spitz zugeschnitten sind. Diese Streifen werden derart auf einer Länge von 45 mm auf der ersten Testplatte verklebt, so dass ein 10 mm langer Anfasser übersteht, der dem über das gleichschenklige Dreieck angespitzten Seite gegenüber liegt, also am rechteckigen Ende des Streifens. Verklebung erfolgt zwischen zwei Glasplatten. Lagerung fand für 2 Wochen bei 85 °C und 85 % relativer Luftfeuchtigkeit statt.

Methode iiib): Die Streifen werden in rechteckigem Format in 5 mm Breite und 85 mm Länge präpariert. Die Verklebung erfolgt zwischen zwei Polycarbonatplatten. Die Verklebungsfläche beträgt 5 mm x 75 mm, weist also ein Aspektverhältnis von 15 auf. Der Testverbund wird für 24 h bei 23 °C und 50 % relativer Luftfeuchtigkeit gelagert.

Methode iiic): Die Streifen werden in rechteckigem Format in 5 mm Breite und 135 mm Länge präpariert. Die Verklebung erfolgt zwischen zwei Polycarbonatplatten. Die Verklebungsfläche beträgt 5 mm x 125 mm, weist also ein Aspektverhältnis von 25 auf. Der Testverbund wird für 24 h bei 23 °C und 50 % relativer Luftfeuchtigkeit gelagert.

### Test iv - Dicke

Die Dicke einer Klebemasseschicht kann durch Bestimmung der Dicke eines bezüglich seiner Länge und seiner Breite definierten Abschnitts einer solchen auf einen Träger oder Liner aufgetragenen Klebemassenschicht bestimmt werden, abzüglich der (bekannten oder separat ermittelbaren) Dicke eines Abschnitts gleicher Dimensionen des verwendeten Trägers bzw. Liners. Die Dicke der Klebemasseschicht lässt sich über handelsübliche Dickenmessgeräte (Taster-Prüfgeräte) mit Genauigkeiten von weniger als 1 µm Abweichung ermitteln. In der vorliegenden Anmeldung wird das Präzisions-Dickenmessgerät Mod. 2000 F der Firma Wolf Messtechnik GmbH eingesetzt, das einen kreisrunden Taster mit einem Durchmesser von 10 mm (plan) aufweist. Die Messkraft beträgt 4 N. Der Wert wird 1 s nach Belastung abgelesen. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

### Test v - Zugfestigkeit und Bruchdehnung

Aus dem zu prüfenden Selbstklebeartikel werden mit Hilfe eines Form-Stanzeisens und einer geeigneten Presse Hantelprüfkörper gestanzt. Probenkörpertyp: 5A gem. DIN EN ISO 527-2:2019-02. Die beiden Endstücke des Hantelprüfkörpers werden in eine Zugprüfmaschine eingespannt und bei einer Prüfgeschwindigkeit von 800 mm/min bis zum Bruch gedehnt. Die Klemmbacken sind aus Aluminium und konvex. Die runden Klemmbacken sollen ein Reißen der Proben im Bereich der Klemmbacken verhindern. Im Bereich der Klemmbacken kommt es zu einem Dehnungssprung. Der eingespannte Teil des Prüfkörpers kann sich nicht dehnen, während sich beim Rest die Polymerketten strecken. Die Schulter soll einem Bruch im Bereich des Dehnungssprungs entgegenwirken. Die Probe muss mittig reißen. Die freie Dehnlänge (Einspannlänge) L₀ ist gleich der parallelen Probenlänge. L₀ ist der Anfangsabstand der Klemmbackenmitten. L₀ = 70 mm. Während der Messung wird die Kraft aufgenommen. Die Zugfestigkeit in MPa ist diejenige Kraft in N bezogen auf die Querschnittsfläche in mm² des Probekörpers (Stegbreite x Schichtdicke), die bei der Bruchdehnung in % aufgezeichnet wird.

Die Dicke jedes Probenkörpers ist mit dem Dickentaster an einem breiten Ende zu ermitteln und ins Prüfprogramm einzugeben. Zur Bestimmung der Probenkörperdicke wird ein Hand-Dickentaster mit einer Genauigkeit von 0,001 mm verwendet.

Prüfklima: 23 ±1 °C, 50 ± 5 % rel. Feuchte.

### Test vi - Stripkraft

Die Ablösekraft (Stripkraft beziehungsweise Stripspannung) wird mit einer Probe des zu untersuchenden Gegenstandes, insbesondere Selbstklebeproduktes bzw. Permanentträgers, mit den Abmessungen 50 mm Länge × 20 mm Breite mit einem am oberen Ende nicht haftklebrigem Anfasserbereich ermittelt. Die Probe wird zwischen zwei deckungsgleich zueinander angeordneten Stahlplatten mit einer Abmessung von 50 mm × 30 mm mit einem Anpressdruck von jeweils 50 Newton verklebt. Die Stahlplatten haben an ihrem unteren Ende je eine Bohrung zur Aufnahme eines S-förmigen Stahlhakens. Das untere Ende des Stahlhakens trägt eine weitere Stahlplatte, über die die Prüfanordnung zur Messung in der unteren Klemmbacke einer Zugprüfmaschine fixiert werden kann. Die Verklebungen werden für eine Dauer von 24 Stunden bei 23 °C und 50 % relativer Luftfeuchtigkeit gelagert. Nach der Rekonditionierung auf Raumtemperatur wird der Probenstreifen mit einer Zuggeschwindigkeit von 800 mm pro Minute parallel zur Verklebungsebene und kontaktfrei zu den Kantenbereichen der beiden Stahlplatten herausgelöst. Dabei wird die erforderliche Ablösekraft in Newton (N) gemessen. Angegeben wird der Mittelwert der Stripkraftwerte (in N pro cm), gemessen in dem Bereich, in welchem das Selbstklebeprodukt auf einer Verklebungslänge zwischen 10 mm und 40 mm von den Stahluntergründen abgelöst ist.

### Test vii - DSC

Glasübergangspunkte - synonym als Glasübergangstemperaturen bezeichnet - insbesondere von Polymeren bzw. Polymerblöcken werden angegeben als Ergebnis von Messungen mittels Dynamischer Differenzkalorimetrie DDK (englisch Dynamic Scanning Calorimetry; DSC) gemäß der DIN 53 765:1994-03, insbesondere Abschnitte 7.1 und 8.1, jedoch mit einheitlichen Heiz- und Kühlraten von 10 K/min in allen Heiz- und Kühlschritten (vergleiche DIN 53 765:1994-03; Abschnitt 7.1; Anmerkung 1). Die Probeneinwaage beträgt 20 mg. Auch die Schmelztemperatur bzw. Erweichungstemperatur von Polymeren bzw. Polymerblöcken wird auf diese Weise ermittelt.

### Test viii - Erweichungstemperatur

Für Einzelsubstanzen: Die (Kleb)Harzerweichungstemperatur (Erweichungspunkt; Erw.-Punkt) wird nach der einschlägigen Methodik durchgeführt, die als Ring & Ball bekannt ist und nach ASTM E28 standardisiert ist.

### Test ix - DACP

In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5 %, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99 %, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Firma Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

### Test x - MMAP

In ein trockenes Probenglas werden 5,0 g Testsubstanz (das zu untersuchende Klebharzmuster) eingewogen und mit 10 mL trockenem Anilin (CAS [62-53-3], ≥ 99,5 %, Sigma-Aldrich #51788 oder vergleichbar) und 5 mL trockenem Methylcyclohexan (CAS [108-87-2], ≥ 99 %, Sigma-Aldrich #300306 oder vergleichbar) versetzt. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Firma Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der MMAP-Wert desto höher ist die Aromatizität der Testsubstanz.

### Test xi - Molmasse (GPC)

### a) Peakmolmasse von einzelnen Blockcopolymermoden

Polymere sind im Hinblick auf die Molmassenverteilung polymodale Systeme. Mischungen aus verschiedenen Polymeren können als multimodale Systeme, wobei jedes Polymer eine eigene Molmassenverteilung einbringt, aufgefasst werden. Mischungen von Blockcopolymeren mit Strukturen unterschiedlicher Molmassenverteilung können ebenfalls als multimodale Systeme aufgefasst werden. Jedes Blockcopolymer bringt dann eine eigene Molmassenverteilung ein. Der Einfachheit werden diese hier Blockcopolymermode genannt.

GPC bietet sich als messtechnisches Verfahren zur Bestimmung der Molmasse einzelner Polymermoden in Gemischen verschiedener Polymere an. Für die im Sinne dieser Erfindung einsetzbaren durch lebende, anionische Polymerisation hergestellten Blockcopolymere sind die Molmassenverteilungen typischerweise ausreichend eng, so dass Polymermoden, die sich Triblockcopolymeren, Diblockcopolymeren oder Multiblockcopolymeren zuordnen lassen, ausreichend voneinander aufgelöst im Elugramm auftreten. Es lässt sich dann die Peakmolmasse für die einzelnen Polymermoden aus den Elugrammen ablesen.

Peakmolmassen (Peak-MM) werden mittels Gelpermeationschromatographie (GPC) bestimmt. Als Eluent wird THF eingesetzt. Die Messung erfolgt bei 23 °C. Als Vorsäule wird PSS-SDV, 5 µ, 10³ Å, ID 8,0 mm x 50 mm verwendet. Zur Auftrennung werden die Säulen PSS-SDV, 5 µ, 10³ Å sowie 10⁴ Å und 10⁶ Å mit jeweils ID 8,0 mm x 300 mm eingesetzt. Die Probenkonzentration beträgt 4 g/l, die Durchflussmenge 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt. (µ = µm; 1 Å = 10⁻¹⁰ m).

### b) Gewichtsmittlere Molmasse insbesondere von Weichmachern, Klebharzen und Endblockverstärkern:

Die Angaben des zahlenmittleren Molekulargewichts Mₙ bzw. gewichtsmittleren Molekulargewichts M_{w} in dieser Schrift beziehen sich auf die Bestimmung per Gelpermeationschromatographie (GPC). Die Bestimmung erfolgt an 50 µl klarfiltrierter Probe (Probenkonzentration 3 g/I). Als Eluent wird Tetrahydrofuran eingesetzt. Die Messung erfolgt bei 35 °C. Als Vorsäule wird eine Säule Typ SDV, 3 µm, 8,0 mm * 50 mm (Angaben hier und im Folgenden in der Reihenfolge: Typ, Partikelgrösse, Porosität bei Trennsäulen, Innendurchmesser * Länge; 1 Å = 10⁻¹⁰ m) verwendet. Zur Auftrennung wird eine Kombination der Säulen des Typs SDV, 3 µm, 10³ Å sowie 10³ Å und 10⁴ Å mit jeweils 8,0 mm * 300 mm eingesetzt (Säulen der Firma Agilent Technologies Inc.; Detektion mittels Differentialrefraktometer PSS SECcurity² RI). Die Durchflussmenge beträgt 1,0 ml/min. Die Kalibrierung wird mittels des kommerziell verfügbaren ReadyCal-Kits Poly(styrene) der Firma Agilent Technologies Inc. Durchgeführt, so dass die Angabe der Daten in Polystyrol-Massenäquivalenten erfolgt.

### Test xii - Polyvinylaromaten-Anteil

Der Anteil an Polyvinylaromaten-Blöcken in hydrierten Polyvinylaromat-Polydien-Blockcopolymeren wird, sofern nicht anderweitig bekannt, mittels ¹³C-NMR bestimmt. Am Beispiel der Bestimmung des Polystyrol-Anteils in hydrierten Polystyrol-Polydien-Blockcopolymeren (SEBS) wird die ¹³C-NMR im Folgenden erläutert. Aus dem ¹³C-Spektrum wird der Mittelwert aus zwei Integralen gebildet, nämlich dem Styrol-C-Signal bei ca. 144 bis 146 ppm und dem Styrol-CH bei ca. 125 bis 127 ppm entsprechend. Dieser Mittelwert wird für SEBS in Relation zum Butylen-Integral (hydrierte 1,2-Polybutadien-Wiederholungseinheiten), nämlich dem CH₃-Signal bei ca. 10 ppm, und zum Ethylen-Integral (hydrierte 1,4-Polybutadien-Wiederholungseinheiten), den man aus dem gesamtolefinischen Integral bei ca. 20 bis 50 ppm ausrechnen kann, gesetzt. Die so erhaltenen Anteile in mol-% werden dann in Gew.-% umgerechnet.

### Test xiii - Dichte

Die Dichte, d.h. absolute Dichte, einer Klebemasse bzw. Klebemasseschicht wird ermittelt durch Quotientenbildung aus Masseauftragsgewicht, ermittelt an einem 100 cm² Kreisausschnitt, und Dicke der auf einen Träger oder Liner aufgetragenen Klebemassenschicht. Der Masseauftrag kann durch Bestimmung der Masse eines bezüglich seiner Länge und seiner Breite definierten Abschnitts einer solchen auf einen Träger oder Liner aufgetragenen Klebemassenschicht bestimmt werden, abzüglich der (bekannten oder separat ermittelbaren) Masse eines Abschnitts gleicher Dimensionen des verwendeten Trägers bzw. Liners. Die Bestimmung der Dicke erfolgt gemäß Test iv.

### I. Verwendete Rohmaterialien

**Tabelle 2: verwendete Chemikalien**

| **Komponente** | **Substanz** | **Beschreibung** | **Firma** |
|---|---|---|---|
| Elastomer | Kraton^{®} G1654 | SEBS; | Kraton Corp. |
| | | PS-Anteil 31 Gew.-%; | |
| | | Diblock-Anteil: 0 Gew.-% | |
| | | Peak-Mw*: 160.000 g/mol | |
| | Kraton^{®} G1726 | SEBS; | Kraton Corp. |
| | | PS-Anteil 30 Gew.-%; | |
| | | Diblock-Anteil: 70 Gew.-% | |
| | | Peak-Mw*: 65.000 g/mol | |
| Klebharz | Regalite^{®} R1125 | C₉ KW-Harz; | Synthomer |
| | | Erw.-Punkt: 125 °C | |
| | | MMAP: 88 °C | |
| | | DACP: 56 °C | |
| | | Vollhydriert | |
| | Regalite^{®} R1100 | C₉ KW-Harz; | Synthomer |
| | | Erw.-Punkt: 100 °C | |
| | | MMAP: 75 °C | |
| | | DACP: 45 °C | |
| | | Vollhydriert | |
| Verstärker | Endex 155 | Aromatisches KW-Harz | Synthomer |
| | | Erw.-Punkt: 153 °C | |
| | | Mw: 6.600 g/mol | |
| | | MMAP: 15 °C | |
| | | DACP: -23 °C | |
| Weichmacher | TerPIB 2600 | Polybuten | ter Hell |
| | | Peak-Mw: 11.000 g/mol | |
| | | Mw: 9.200 g/mol | |
| Additive | Irganox^{®} 1726 | Alterungsschutzmittel | BASF |
| Schäumungsmittel | Matsumoto FN190SSD | Expandierbare Mikroballons mit einem Expansionsbereich zwischen 155 °C und 220 °C und einem Durchmesser in expandierter Form von etwa 10 µm bis 15 µm. | |

- PS-Anteil:: Polystyrolanteil
- Erw.-Punkt:: Erweichungspunkt

### II. Versuche

Es wurde eine Reihe von Testklebebandmuster mit jeweils einer Schicht H1 der Haftklebemasse mit den erfindungsgemäß näher definierten Bestandteilen sowie Vergleichsmassen erzeugt.

### Herstellverfahren (Hotmelt-Verfahren):

Die Herstellung von Haftklebeformulierungen erfolgte für die Mustererstellung lösemittelfrei mittels eines Planetwalzenextruders (PWE), welcher einen Einzugsbereich und zwei Verfahrensteile umfasste. Die Anlaufringe hatten in Verfahrensrichtung einen zunehmenden Durchmesser. Obwohl unterschiedliche Spindelbestückungen geeignet waren, wurden Bestückungen bevorzugt, welche im ersten Verfahrensteil mindestens ¾ der maximalen Bestückungszahl betrugen. Die Elastomerkomponenten, die Verstärkerkomponente und das Additiv wurden im Einzug des PWEs dosiert. Die Harzkomponenten wurden aufgeschmolzen und im ersten Verfahrensteil des PWEs zugegeben. Besonders geeignet zur Herstellung von homogenen Mischungen war ein Harz-Split, in dem ein Teil des Harzes im Einzugsbereich zugegeben wurde und der Rest downstream im ersten Verfahrensteil. Besonders geeignet war dabei die Zugabe beider Anteile flüssig über Sidefeed oder Anlaufringe, wobei der erste Anteil ca. 30 Gew.-% der gesamten Harzmenge beträgt, und soweit nicht anders angegeben, wurde das Verfahren so ausgeführt. Geeignet wäre auch die Zugabe des ersten Harzanteils fest im Einzug des PWEs oder über Sidefeed im Einzugsbereich. Denkbar wäre auch die Zugabe eines zweiten Harzes oder Harzanteils in fester Form. Die Mikroballons wurden in fester Form über einen Sidefeed im letzten Drittel des Extruders zugegeben. Die Massetemperatur betrug 190 - 200 °C.

Die Beschichtung erfolgte durch Einführung des heißen Haftklebemassencompounds in einen 2-Walzenkalander zwischen zwei Linern, so dass eine Dicke von 500 µm erreicht wurde.

Die Beschichtung wurde bis zur weiteren Verwendung mit einer weiteren Lage eines silikonisierten Polyester Trennliners eingedeckt.

Die Zusammensetzungen und Versuchsergebnisse sind in Tabelle 3 angegeben.

Mit "E" gekennzeichnete Beispiele sind erfindungsgemäße Beispiele. Mit "V" gekennzeichnete Beispiele sind Vergleichsbeispiele.

Die Mengenangaben zu den Bestandteilen stellen Gewichtsprozent dar.

Die Mengen der Bestandteile a) bis f) ergeben zunächst 100 Gew.-%.

Zu dieser Basismischung werden dann unexpandierte Mikroballons in den angegebenen Gewichtsanteilen gegeben. Da V1 ungeschäumt ist, werden von der Basismischung naturgemäß 100 Gew.-% verwendet. Im Fall von E1 werden 99 Gew.-% der Basismischung und 1 Gew.-% Mikroballons verwendet usw.

Bei den Beispielen E4 und E6 wurde der Reißertest gemäß Testbeschreibung iiia) aber auch mit Geometrien mit einem großen Aspektverhältnis durchgeführt. Hierbei wurde die angegebene Anzahl an Mustern der Geometrien gemäß iiib) bzw. iiic) hergestellt.

**Tabelle 3**

| **Komponente** | | **V1** | **E2** | **E3** | **E4** | **E5** | **E6** |
|---|---|---|---|---|---|---|---|
| (a) Elastomer | Kraton G1654 | 26,0 | 26,0 | 26,0 | 26,0 | 26,0 | 26,0 |
| | Kraton G1726 | 26,0 | 26,0 | 26,0 | 26,0 | 26,0 | 26,0 |
| (b) Klebharz | Regalite R1100 | 27,0 | 27,0 | 27,0 | 27,0 | 27,0 | 27,0 |
| | Regalite R1125 | 10,0 | 10,0 | 10,0 | 10,0 | 10,0 | 10,0 |
| (c) Verstärker | Endex 155 | 5,0 | 5,0 | 5,0 | 5,0 | 5,0 | 5,0 |
| (d) Weichmacher | terPib 2600 | 5,0 | 5,0 | 5,0 | 5,0 | 5,0 | 5,0 |
| (f) Additive | Irganox 1726 | 1,0 | 1,0 | 1,0 | 1,0 | 1,0 | 1,0 |
| **Menge Basis** [Gew.-%] | | 100,0 | 99,0 | 98,5 | 98,0 | 97,5 | 97,0 |
| (e) Schäumungsm ittel [Gew.-%] | Matsumoto FN190SSD | 0 | 1,0 | 1,5 | 2,0 | 2,5 | 3,0 |
| Musterdicke H1 [µm] | | 500 | 500 | 500 | 500 | 500 | 500 |
| Dichte [kg/m³] | | 947 | 770 | 690 | 631 | 610 | 600 |
| Klebkraft Stahl 180° [N/cm] | | 25,1 | 22,5 | 20,5 | 19,8 | 16,1 | 14,9 |
| SAFT 50 g [°C] | | 182 °C | 183 °C | 180 °C | 182 °C | 177 °C | 174 °C |
| Zugfestigkeit max. [MPa] | | 19,3 | 9,2 | 7,5 | 6,0 | 5,8 | 5,8 |
| Stripkraft mittel [N/cm] | | 10,5 | 10,1 | 9,8 | 9,6 | 9,5 | 9,4 |
| Reißerbeständ igkeit (nach 85 °C/85 % r.F.) [%], Test iiia | | 60 | 100 | 90 | 100 | 100 | 100 |
| Reißerbeständ igkeit (nach 23 °C/50 % r.F.) [%], Test iiib | | | | | 90 | | 100 |
| Reißerbeständ igkeit (nach 23 °C/50 % r.F.) [%], Test iiic | | | | | 80 | | 100 |

Die erfindungsgemäßen Beispiele zeigen - wie zu erwarten war - durch die Schäumung eine verringerte Zugfestigkeit. Unvorhersehbar ist aber, dass die Stripkraft nicht in gleichem Maße abfällt und die erfindungsgemäßen Beispiele sogar trotzdem eine Verbesserung in der Reißerbeständigkeit zeigen.

Überraschend ist dabei zudem, dass auch solche Probekörper mit einem hohen Aspektverhältnis, wie hier beispielsweise 15 oder 25, eine sehr gute Reißerbeständigkeit zeigen.

Zudem zeigen die erfindungsgemäßen Beispiele hohe Wärmescherfestigkeiten, wie anhand der Versagenstemperatur SAFT erkennbar.

## Patentansprüche

1. Durch dehnendes Verstrecken wiederablösbarerer Selbstklebeartikel, der zumindest eine Schicht H1 einer Haftklebemasse aufweist, wobei die Haftklebemasse die folgenden Bestandteile enthält:
(a) eine Elastomerkomponente, wobei die Elastomerkomponente (a)
40 bis 100 Gew.-% an i.) hydrierten Polyvinylaromat-Polydien-Blockcopolymeren P umfasst, die einen linearen ABA-Aufbau oder einen linearen (AB)₂Z-Aufbau oder einen radialen (AB)ₙ-Aufbau oder einen radialen (AB)ₙ-Z-Aufbau mit n ≥ 3 aufweisen, wobei A = Polyvinylaromat, B = Ethylen und Butylen oder Ethylen und Propylen und Z = Derivat einer Kopplungssubstanz sind und wobei der Ethylen-Anteil in den B-Blöcken bevorzugt mindestens 50 Gew.-% beträgt, wobei das oder die hydrierten Polyvinylaromat-Polydien-Blockcopolymere P einen Polyvinylaromatenanteil von mindestens 15 Gew.- % und ein Peak-Molekulargewicht von 60.000 bis 500.000 g/mol, bestimmt gemäß GPC (Test xi-a), aufweisen, wobei
die Polydien-Blöcke einen Hydrierungsgrad von wenigstens 90 % aufweisen, und
(b) eine Klebharzkomponente, und
(c) optional eine Verstärkungskomponente, die wenigstens ein Harz mit einem MMAP-Wert zwischen -10 °C und +30 °C, und einem Erweichungspunkt von mindestens 140 °C ist, und
(d) optional eine Weichmacherkomponente,
**dadurch gekennzeichnet, dass** (e) die Haftklebemasse geschäumt ist.

2. Selbstklebeartikel nach Anspruch 1, **dadurch gekennzeichnet, dass** das oder die hydrierten Polyvinylaromat-Polydien-Blockcopolymere P einen Polyvinylaromatenanteil von mindestens 18 Gew.-%, bevorzugt mindestens 25 Gew.-%, und/oder ein Peak-Molekulargewicht von 80.000 bis 500.000 g/mol, bevorzugt 100.000 bis 500.000 g/mol, bestimmt gemäß GPC (Test xi-a), aufweisen.

3. Selbstklebeartikel nach Anspruch 1 oder 2, **dadurch gekennzeichnet, dass** die Elastomerkomponente (a) 40 bis 99,9 Gew.-% an i.) hydrierten Polyvinylaromat-Polydien-Blockcopolymeren P umfasst, und die Elastomerkomponente (a) zudem 0,1 bis 60 Gew.-% an ii.) hydrierten Polyvinylaromat-Polydien-Diblockcopolymeren D mit einem A'B'-Aufbau oder (A'B')₁Z-Aufbau umfasst, wobei A' = Polyvinylaromat, B' = Ethylen und Butylen oder Ethylen und Propylen, Z = Derivat einer Kopplungssubstanz ist und A' = A und B' = B sein kann,
wobei die Summe der Mengen an hydrierten Polyvinylaromat-Polydien-Diblockcopolymeren D und Polyvinylaromaten-Polybutadien-Blockcopolymeren P in der Elastomerkomponente (a) 90 bis 100 Gew.-%, bevorzugt 95 bis 100 Gew.-%, besonders bevorzugt 100 Gew.-%, bezogen auf das Gesamtgewicht der Elastomerkomponente (a), beträgt.

4. Selbstklebeartikel nach einem der vorherigen Ansprüche, **dadurch gekennzeichnet, dass** der Anteil an hydrierten Polyvinylaromat-Polydien-Diblockcopolymeren D in der Elastomerkomponente (a) mindestens 10 Gew.-%, bevorzugt mindestens 20 Gew.-%, besonders bevorzugt mindestens 25 Gew.-%, und bis zu 60 Gew.-%, bevorzugt bis zu 55 Gew.-%, wiederum bevorzugt bis zu 45 Gew.-%, beträgt.

5. Selbstklebeartikel nach einem der vorherigen Ansprüche, **dadurch gekennzeichnet, dass** die Haftklebemasse 2,5 bis 18 Gew.-%, bevorzugt 2,5 bis 15 Gew.-%, besonders bevorzugt 3,5 bis 8 Gew.-%, bezogen auf das Gesamtgewicht der Haftklebemasse, der Verstärkungskomponente (c) enthält.

6. Selbstklebeartikel nach einem der vorherigen Ansprüche, **dadurch gekennzeichnet, dass** die Haftklebemasse 38 bis 60 Gew.-%, bezogen auf das Gesamtgewicht der Haftklebemasse, der Elastomerkomponente (a) enthält.

7. Selbstklebeartikel nach einem der vorherigen Ansprüche, **dadurch gekennzeichnet, dass** die Haftklebemasse 25 bis 55 Gew.-%, bevorzugt 32 bis 50 Gew.-%, besonders bevorzugt 35 bis 45 Gew.-%, bezogen auf das Gesamtgewicht der Haftklebemasse, der Klebharzkomponente (b) enthält.

8. Selbstklebeartikel nach einem der vorherigen Ansprüche, **dadurch gekennzeichnet, dass** die Erweichungstemperatur des wenigstens einen Harzes der Verstärkungskomponente (c) höchstens 170 °C beträgt.

9. Selbstklebeartikel nach einem der vorherigen Ansprüche, **dadurch gekennzeichnet, dass** das wenigstens eine Harz der Verstärkungskomponente wenigstens ein Harz basierend auf wenigstens einer, insbesondere aromatischen, Kohlenwasserstoffverbindung ist, bevorzugt ausgewählt ist aus der Gruppe bestehend aus Styrol, alpha-Methylstyrol, para-Methylstyrol und Copolymeren daraus, wobei das wenigstens eine Harz der Verstärkungskomponente vorzugsweise ein gewichtsmittleres Molekulargewicht M_{w} von 1.000 g/mol bis 15.000 g/mol, bevorzugt 2.000 g/mol bis 10.000 g/mol aufweist.

10. Selbstklebeartikel nach einem der vorherigen Ansprüche, **dadurch gekennzeichnet, dass** die Haftklebemasse zudem eine Weichmacherkomponente (d) in einer Menge von 0,5 bis 25 Gew.-%, bevorzugt 2 bis 18 Gew.-%, enthält.

11. Selbstklebeartikel nach einem der vorherigen Ansprüche, **dadurch gekennzeichnet, dass** die Haftklebemasse mittels Expansion expandierbarer Mikroballons geschäumt ist, wobei der Anteil der expandierbaren Mikroballons vor der Expansion bevorzugt mindestens 1,8 Gew.-% beträgt, besonders bevorzugt 2 bis 10 Gew.-% beträgt, jeweils bezogen auf das Gesamtgewicht der ungeschäumten Haftklebemasse.

12. Selbstklebeartikel nach einem der vorherigen Ansprüche, **dadurch gekennzeichnet, dass** es sich um ein Transferklebeband der Haftklebemasseschicht H1 handelt.

13. Selbstklebeartikel nach einem der Ansprüche 1 bis 11, **dadurch gekennzeichnet, dass** er zusätzlich zumindest eine Lage eines dehnbaren Permanentträgermaterials aufweist.

14. Selbstklebeartikel nach einem der vorherigen Ansprüche, **dadurch gekennzeichnet, dass** er ein Aspektverhältnis Länge/Breite von ≥ 15, sehr bevorzugt von ≥ 25 aufweist.

15. Verwendung des Selbstklebeartikels nach einem der vorherigen Ansprüche zur Verklebung im Automobilbereich, insbesondere zur Verklebung von großflächigen Funktionselementen, sowie zur Verklebung von Bauteilen in elektronischen, optischen oder feinmechanischen Geräten, medizinischen Geräten und zahnmedizinischen Geräten.
